# EUROPEAN PATENT APPLICATION

(11) **EP 3 928 632 A1**
(43) Date of publication of application: **29.12.2021**
(21) Application number: 20305715.3
(22) Date of filing: 26.06.2020
(51) Int. Cl.: A23J 1/00, A23J 1/14, A23J 1/12

(54) **PRODUCTION OF NON-PRECIPITATED PLANT PROTEIN ISOLATES**

(71) Applicant: Improve, 80480 Dury (FR)
(72) Inventor: SCHWAB, Jérôme, 80290 NAMPS AU MONT (FR)
(74) Representative: Lavoix

(57) **Abstract**

The present invention concerns a method for preparing a protein isolate displaying a purity higher than 85% from plant parts, said method comprising the following successive steps:
a) washing said plant parts in acidic conditions, thereby obtaining acid washed plant parts;
b) contacting said acid washed plant parts with an alkaline solution, and
c) recovering the liquid fraction thereby obtaining a protein isolate displaying a purity higher than 85%,
wherein said method does not comprise any precipitation step and any membrane filtration step.

## Description

The present invention concerns the preparation of plant protein isolates.

Plant materials include a wide and varied group of plant parts from many species. General categories of plant materials include grasses, woods, stems, roots, seeds, and leaves. Basic chemical composition is similar among the structures, as each one is made up with polysaccharides, proteins, lipids and other minor components. Instead, differences are to be found in proportions among these macro-components, the kinds of and their biological activity, such as structural (woods, stems, roots), respiratory (leaves) and energy reservoir (starch and proteins) of the plant (seeds). Therefore, proteins are integrated in complex and different architectures made up with several kinds of molecules.

Seed proteins were empirically classified by Osborne on the basis of their solubility, as follows:
- water extractable (albumins);
- extractable in diluted salt solutions (globulins);
- extractable in aqueous alcohol (prolamins);
- extractable by weakly acidic or alkaline or diluted SDS solutions (glutelins).

Later on, seed proteins have been also categorized based on their sedimentation coefficients (S) (Mandal and Mandal (2000) Current Science 79:576-589).

Classification divides seed proteins into storage, structural and biologically active proteins. As shown in Table 1 below, classification divides seed proteins into albumins (2S) which constitutes diverse biologically active proteins (lectins, enzymes and enzyme inhibitors) and storage proteins remobilized during seed germination. Globulins (7S whose molecular weight is comprised between 150 and 190 kDa and 11/12S whose molecular weight is comprised between 300 and 360 kDa) are the major storage proteins of dicots (e.g. pulses and oilseeds beans) whereas prolamin and glutelin families are major storage proteins in monocots (e.g. cereals).

**Table 1: Seed proteins solubility (Osborne's classification)**

| **Proteins fraction** | **Albumin** | **Globulin** | **Prolamin** | **Glutelin** |
|---|---|---|---|---|
| ***Solubility*** | Water | Salty solution | Ethanol 70% | pH>11 |
| ***Function in plant*** | Physiologic | Storage | Storage | Storage |
| **Soybean** | 10% | 90% | | |
| **Pea** | 20% | 65% | | 15% |
| **Faba bean** | 25% | 55% | | 20% |
| **Sunflower** | 20% | 60% | 5% | 15% |
| **Rapeseed** | 50% | 25% | 5% | 10% |
| **Mil** | 8% | 4% | 46% | 42% |
| **Wheat** | 5% | 10% | 45% | 40% |

Protein concentrates or isolates from seeds are interesting ingredients for industries, due to their nutritional values and functional abilities. Production processes are generally developed according to final product specifications. In fact, value of a protein ingredient increases as a function of its purity and functionality. The market price for a non-soluble concentrate is low (< 2€/kg), whereas a soluble protein isolate able to foam, to stabilize an emulsion, or to get gel can be sold between 4-8 €/kg.

Wet fractionation process is a combination of unit operations having the purpose to exploit physicochemical properties of proteins, such as their solubility, in order to separate and to isolate them from other macro-components, as well as micro-components. Using this strategy, it is possible to produce protein isolates enriched in globulin-protein fraction with a high-purity level (> 90 % proteins, over dry matter - N x 6,25).

The simplest wet fractionation process used to produce protein concentrates or isolates from pulse seeds or oilseed cake consists in a two-step process described in US2785155. In this process, the raw matter is suspended in an alkaline environment permitting protein extraction (globulin and albumin families, mainly) and solubilizing said proteins in the solvent, leaving other insoluble components (starch and fibers) dispersed in the same solvent.

Following solid/liquid separation cleaning the supernatant, protein purification is performed by isoelectric precipitation. Addition of acid chemical, like hydrochloric acid, is managed to reach the pH at which electrical charges are neutralized (usually, pH range 4.0-5.0). Reduced interactions between proteins and solvent allows them to change the phase (solution/suspension) and to precipitate. Then, solid/liquid separation enables collecting precipitated proteins, which can be optionally neutralized and dried at the end of the process.

Later, the process was optimized and other versions or ways to produce protein isolates were proposed, such as performing the extraction step in acidic conditions (Alli et al. (1993) J. Agr. Food Chem. 41:1830-1834), or in water (Klamczynska et al. (2001) Int. J Food Sci. & Technol. 36:563-572). Observing overall purity of obtained products, acid and/or alkaline extraction shows high purity level (> 90 %), while 50-65 % is purity level of water extracted proteins (Chéreau et al. (2016) OCL 23:D406.

Alternatively, ultrafiltration way can be used to purify protein instead of acid precipitation (Olsen et al. (1978) J. Sci. Food Agric. 29:323-331). The main difference with isoelectric precipitation is that protein physicochemical properties, like solubility and technological abilities, are generally of higher level when using ultrafiltration approach.

Classically, purification process steps are designed to maximize yield and purity of final isolate. Extraction and solubilization are usually implemented in alkaline environment, because the extraction yield is higher and interactions between phytic acid and proteins are reduced (Ghodsvali et al. (2005) Food Res. Int. 38:223-231).

However, extreme alkaline conditions (pH > 11) have drawbacks because they can lead to protein denaturation, reducing protein solubility and related techno-functional properties (Ma et al. (1990) J. Agric. Food Chem. 38 :1707-1711 ; Manamperi et al. (2011) J. Food Sci. 76 :E266-E273). Also, digestibility can be impacted by these conditions, due to loss of amino acid residues, like lysine, cysteine, serine, threonine, arginine, and some other amino acids residues. In fact, alkali-treated proteins can contain some unusual compounds, such as ornithine, *β*-aminoalanine, lysinoalanine, ornithinoalanine, lanthionine, methyllanthionine and D-*allo*-isoleucine, as well as other D-amino acids (Deng et al. (1990) Can. Inst. Food Sci. Technol. J. 23:140-142).

Furthermore, in these oxidative media, chemical irreversible reactions between proteins and polyphenols are favored. High temperature, metals and oxygen presence are pro-oxidative factors as well, leading to dark-colored final protein isolate, which is unwanted by the consumer (Wanasundara (2011) Crit. Rev. Food Sci. Nutr. 51:635-677; S 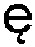 eczyk *et al.* (2019) *Molecules* **24**:408.

To improve flavor of protein isolates, several strategies have been studied. The use of additives added to alkaline medium to counter the oxidative environment is one of them. For example, some kinds of antioxidant-action additives can be used at this stage, like polyacids, sodium hexametaphosphate (SHMP), sodium sulfite, or sodium bisulfite. The use of additives typically limits oxidation phenomena of proteins and polyphenols as well as their interactions. However, addition of chemicals has a cost, that will increase final isolate price. Furthermore, the use of these molecules can be regulated and limited by Country regulations.

Alternatively, off-flavors precursors can be removed by washing raw matter before extraction and solubilization step.

Alcohol-washing is typically used as solvent to clean up flour and defatted cakes because of its ability to remove soluble material as simple sugars, oligosaccharides, fat, and ash from the sample as well as other minor components like volatiles, as they are soluble in alcohol. Typically, such a solvent can remove beany, green flavor from soybeans, peanuts and groundnuts. The use of an amphiphilic, organic and food-grade solvent can thus be a plus to pre-wash raw matter, enabling removing small amounts of lipids as well as off-flavors precursors, such as phenolic compounds. However, interaction between the solvent used for pre-washing and proteins can have negative consequences on protein 3D, denaturing its structure, thereby reducing its technical functionalities (Roland et al. (2017) Cereal Chem. J. 94:58-65. Furthermore, the use of ethanol can have an impact from a technical point of view and costs. Indeed, it is well known that ethanol is flammable and explosive. Accordingly, ATEX environment and ATEX machines, which are more expensive in term of purchase, are necessary to treat alcohol-prewashed flour and cakes. Furthermore, such process implies additional processes of desolventizing raw matter and of purifying ethanol, in order to recycle it.

There is thus an important need for new methods for preparing plant protein isolates with a high purity, while limiting the presence of off-flavors and avoiding expensive equipment.

The present invention arises from the unexpected finding by the inventors that, it is possible, by performing an acid wash on the plant material to remove off-flavors and directly isolate proteins by alkaline extraction without applying a precipitation step. Such a method improves the quality of the final isolate because it can remove off-flavors, reduce undesired and typical plant odors, and increase neutral color of the final isolate. Moreover, avoiding implementation of a precipitation step enables maintaining the protein structures, thereby obtaining a high quality protein isolate.

The present invention thus concerns a method for preparing a protein isolate displaying a purity higher than 85% from plant parts, said method comprising the following successive steps:
a) washing said plant parts in acidic conditions, thereby obtaining acid washed plant parts;
b) contacting said acid washed plant parts with an alkaline solution, and
c) recovering the liquid fraction thereby obtaining a protein isolate displaying a purity higher than 85%,
wherein said method does not comprise any precipitation step and any membrane filtration step.

### Detailed description of the invention

### Plants and plant parts

By "plant" is meant herein all plants and plant populations such as desirable and undesirable wild plants, cultivars and plant varieties (whether or not protectable by plant variety or plant breeder's rights). Examples of plants which can be used in the context of the invention include legumes, pulses, oil seed plants, cereals, root plants and micro-algae.

Pulses include for example lupine, mung bean, bambara groundnut, yellow pea, soy, fababean, chickpea, lentils, beans and pongamia.

Oil seeds plants include for example canola, rapeseed, sunflower and camellia.

Cereals include for example corn, oat and barley.

Root plants include for example potato and casava.

In a particular embodiment, said plants are legumes.

By "legume" is meant herein plants of the Fabaceae or Leguminosae family, which include the six following subfamilies: *Cercidoideae* (including the *Bauhinia* and *Cercis* genera), *Detarioideae* (including the *Amherstia, Detarium* and *Tamarindus* genera), *Duparquetioideae* (including the *Duparquetia* genera), *Dialioideae* (including the *Dialium* genera), *Caesalpinioideae* (including the *Caesalpinia, Senna, Mimosa* and *Acacia* genera), and *Faboideae* (including the *Astragalus, Lupinus* and *Pisum* genera).

In a particular embodiment, said plants are of the *Faboideae* subfamily, more particularly of the *Cicer, Glycin, Lathyrus, Lens, Lupinus, Medicago, Phaseolus, Pisum, Trifolium, Vicia,* or *Vigna* genera.

In still a particular embodiment, said plants are peas, faba beans, chick peas or soybeans.

By "plant parts" is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

In the context of the invention, plant parts also encompass by-products of the plant food industry.

In a particular embodiment, said plant parts are seeds.

In a particular embodiment, said plant parts are used, in the washing step a), under a mechanically transformed form.

In a particular embodiment, said plant parts, in particular said seeds, are used in the form of flour or of cakes, in the washing step a) of the method of the invention.

However, since one of the main advantages of the method of the invention is to avoid protein precipitation during extraction, the plant parts used during the washing step a) of the method of the invention, have preferably not be submitted to a prior protein extraction.

### Protein isolate

The method of the invention enables preparing a protein isolate displaying a purity higher than 85%.

By "protein isolate" is meant herein a product which contains at least 85 % of proteins on dry matter. Typically, a protein isolate corresponds to the most refined form of protein products containing the greatest concentration of proteins but containing no dietary fibre.

By "purity" is meant herein the ratio of the weight of proteins in the isolate to the total weight of the isolate.

### Washing step

Step a) of the method of the invention consists in washing the plant parts, as defined in section "*Plants and plant parts*" above, in acidic conditions, thereby obtaining acid washed plant parts.

By "acidic conditions" is meant herein that the washing solution with which said plant parts are washed has a pH of less than 7. Preferably, the pH of said washing step is comprised between 3.5 and 5, more particularly between 4 and 4.5.

Said washing solution may typically be acidified water. Said acidified water may be obtained using weak acid, such as citric acid, or using strong acid, such as sulfuric acid.

Said washing may be implemented by any technique well-known from the skilled person. Typically, said plant parts may be mixed with said acidified water and incubated for 5 min to 30 min, in particular for 10 min to 20 min.

In a particular embodiment, said washing step is performed under agitation.

In still a particular embodiment, said washing step is performed at a temperature comprised between 10°C and 60°C, more particularly between 12°C and 55°C, still particularly between 20°C and 50°C. In a particular embodiment, said washing step is performed at a temperature comprised between 10°C and 20°C, more particularly between 12°C and 15°C. In an alternative embodiment, said washing step is performed at a temperature comprised between 50°C and 60°C, more particularly between 50°C and 55°C.

In a particular embodiment, said acid washed plant parts are recovered at the end of said washing step by solid/liquid separation.

Solid-liquid separation techniques are well-known from the skilled person and include floatation, sedimentation, centrifugation, cake filtration, screening and attachments. In a particular embodiment, said solid/liquid separation is performed by centrifugation.

As will be understood by the skilled person, proteins of interest included in the plants parts washed at step a) of the method of the invention, are not soluble at an acidic pH. On the contrary, molecules responsible of potential off-flavors, as well as the albumin fraction of said plant parts, are typically soluble in such conditions.

Accordingly, proteins of interest are typically recovered in the solid phase after the solid/liquid separation, whereas molecules responsible of potential off-flavors and albumin are typically discarded through the liquid phase after the solid/liquid separation.

In a particular embodiment, said acid washed plant parts recovered at the end of said washing step have a pH comprised between 3.5 and 5, more particularly between 4 and 4.5.

In a particular embodiment, said washing step may be repeated. However, preferably said washing step is performed only once.

### Rinsing step

In a particular embodiment, the method of the invention further comprises between the washing step a) and the contacting step b), a step of rinsing said acid washed plant parts with an aqueous solution.

Said aqueous solution is preferably water, in particular ultra-pure water.

Said rinsing may be implemented by any technique well-known from the skilled person. Typically, said acid washed plant parts may be mixed with said aqueous solution and incubated for 5 min to 30 min, in particular for 10 min to 20 min.

In a particular embodiment, said rinsing step is performed under agitation.

In still a particular embodiment, said rinsing step is performed at a temperature comprised between 10°C and 60°C, more particularly between 12°C and 55°C, still particularly between 20°C and 50°C. In a particular embodiment, said rinsing step is performed at a temperature comprised between 10°C and 20°C, more particularly between 12°C and 15°C. In an alternative embodiment, said rinsing step is performed at a temperature comprised between 50°C and 60°C, more particularly between 50°C and 55°C..

In a particular embodiment, said rinsed acid washed plant parts are recovered at the end of said rinsing step by solid/liquid separation.

Solid-liquid separation techniques are well-known from the skilled person and include floatation, sedimentation, centrifugation, cake filtration, screening and attachments. In a particular embodiment, said solid/liquid separation is performed by centrifugation.

In a particular embodiment, said rinsed acid washed plant parts recovered at the end of said rinsing step have a pH comprised between 3.5 and 5, more particularly between 3.5 and 4.

In a particular embodiment, said rinsing step may be repeated. Preferably, said rinsing step is performed twice.

### Extraction step

Step b) of the method of the invention consists in contacting the acid washed plant parts (or rinsed acid washed plant parts when a rinsing step in performed) with an alkaline solution.

By "alkaline solution" is meant herein a solution with a pH higher than 7, preferably a pH higher than 8, more preferably a pH of 9.

In a particular embodiment, said acid washed plant parts are mixed with an aqueous solution, such as water, and the pH of said mixture is then adjusted to an alkaline pH, in particular to a pH higher than 7, preferably a pH higher than 8, more preferably a pH of 9.

In an alternative embodiment, said acid washed plant parts are mixed an alkaline solution which has a pH of 7 to 9, in particular a pH of 7, 8 or 9.

Said contacting step may be implemented by any technique well-known from the skilled person. Typically, said acid washed plant parts may be mixed with said solution and incubated for 5 min to 30 min, in particular for 10 min to 20 min.

In a particular embodiment, said contacting step is performed under agitation.

Preferably, said acid washed plant parts are not in the form of a suspension during said contacting step.

In still a particular embodiment, said contacting step is performed at a temperature comprised between 10°C and 60°C, more particularly between 12°C and 55°C, still particularly between 20°C and 50°C. In a particular embodiment, said contacting step is performed at a temperature comprised between 10°C and 20°C, more particularly between 12°C and 15°C. In an alternative embodiment, said contacting step is performed at a temperature comprised between 50°C and 60°C, more particularly between 50°C and 55°C.

Step c) of the method of the invention consists in recovering the liquid fraction which corresponds to the protein isolate prepared by the method of the invention.

Indeed, proteins of interest are typically soluble at alkaline pH, which enables separating them from other constituents of plant parts typically insoluble at such pH, such as the prolamin and glutelin fractions.

In a particular embodiment, said recovering step is performed at a temperature comprised between 10°C and 60°C, more particularly between 12°C and 55°C, still particularly between 20°C and 50°C. In a particular embodiment, said recovering step is performed at a temperature comprised between 10°C and 20°C, more particularly between 12°C and 15°C. In an alternative embodiment, said recovering step is performed at a temperature comprised between 50°C and 60°C, more particularly between 50°C and 55°C.

In a particular embodiment, said liquid fraction is recovered at the end of said recovering step by solid/liquid separation.

Solid-liquid separation techniques are well-known from the skilled person and include floatation, sedimentation, centrifugation, cake filtration, screening and attachments. In a particular embodiment, said solid/liquid separation is performed by centrifugation.

The present inventors demonstrated that about 65% of the proteins present in plant parts were extracted using the method of the invention, which is a yield similar to the yield of the prior art extraction methods. Furthermore, the method of the invention enables obtaining protein isolates with a purity higher than 85%.

However, the method of the invention does not need any precipitation step and any membrane filtration step for obtaining protein isolate displaying such a purity level. Accordingly, in the context of the invention, protein isolates are typically directly obtained at said recovering step. As will be understood by the skilled person, the fact of not applying any precipitation step enables avoiding denaturing extracted proteins present in the isolates, which thus improves the quality of the protein isolates.

By "precipitation step" is meant herein a step aiming at precipitating proteins present in the sample. Such a precipitation step is well-known from the skilled person and typically includes acidic precipitation, organic solvent precipitation, thermal precipitation and ionic force precipitation.

By "membrane filtration step" is meant herein a step aiming at separating proteins from a liquid sample. Such a membrane filtration step is well-known from the skilled person and includes microfiltration, nanofiltration, ultrafiltration, reverse osmosis, membrane chromatography, high performance tangential flow filtration and electrophoretic membrane contactor.

As will be understood by the skilled person, no precipitation step or membrane filtration step is applied to obtain the protein isolate displaying a purity higher than 85% by the method of the invention. However, if the skilled person wishes to further purify the proteins of said isolate, or to further extract specific proteins of said isolate, such precipitation step or membrane filtration step may be applied on the protein isolate obtained by the method of the invention.

The method of the invention may further be used for sequential extraction of proteins, typically at different pH.

In that particular embodiment, said extraction steps b) and c) are repeated at least once, at a higher pH.

Such a repetition enables sequentially extracting different proteins which are soluble at different alkaline pH.

For example, said extraction step b) may further be performed at a pH of 7, and then repeated, after said recovering step c), at a pH of 8, and for example repeated once again at a pH of 9.

### Additional steps

The method of the invention may further comprise, after said recovering step c) optional additional steps, typically additional steps useful to stabilize, preserve, concentrate or package said protein isolates.

In a particular embodiment, the method of the invention further comprises after said recovering step c) a neutralization step, a heat treatment step, a concentration step and/or a drying step.

Neutralization steps are well-known from the skilled person and typically involves adjusting pH of the protein isolates to a value of about 7

Heat treatment steps are well-known from the skilled person, and aim at stabilizing the protein isolates. For example, heat treatment may be performed in a tubular heat exchanger for example at a temperature higher than 70°C, for example at 90°C, for a small period, for example for 30 s to 2 min, typically for 90 s.

Concentration step may be performed by any technique well-known from the skilled person, such as by evaporation.

Drying step may be performed by any technique well-known from the skilled person, such as by spray drying.

The present invention will be further illustrated by the figures and examples below.

### Brief description of the figures

**Figure 1****:** Pilot scale process description
**Figure 2****:** Evaluation of the foaming capacity
**Figure 3****:** Proteins solubility
**Figure 4****:** Gelling property of standard pH-metric proteins
**Figure 5****:** Gelling property of proteins obtained by the method of the invention
**Figure 6****:** Viscosity of proteins solution (10% DS)
**Figure 7****:** Viscosity evolution according to the DS content

### Examples

### Example 1: Process development on faba bean

The aim of these pre-series of tests was to define the main steps of the proteins extraction and purification process. There were performed with dehulled fababean flour, at lab scale.

Materials and methods are described in Table 2.

| **Table 2:** Materials and methods | | |
|---|---|---|
| **Step** | **Principle** | **Material and method** |
| Acid wash 1 | Flour and acidified water mixing followed by a solid / liquid separation | Flour: Pin milled, dehulled faba bean Acidified ultra-pure water with citric acid. Citric acid powder quantity = 3 % of flour quantity |
| | | Flour on acidified water ratio: 1/6 Q citric acid + Q water + Q flour = Q_{AW1} Temperature: 50 °C |
| | | pH target, after flour addition: 4.5 |
| | | Time before solid / liquid separation: 10 min |
| | | Agitation: magnetic stirrer |
| Acid wash 2 | Pellets of acid wash 1 and acidified water mixing, followed by a solid / liquid separation | Acidified RO water with citric acid. Citric acid / water ratio: Equivalent to acid wash 1 |
| | | Acidified water addition: qs Q_{AW1} |
| | | Temperature: 50 °C |
| | | pH, after pellets addition: 3.6 |
| | | Time before solid / liquid separation: 10 min |
| | | Agitation: magnetic stirrer |
| Rinse step | Pellets of acid wash and water mixing, followed by a solid / liquid separation | Ultra-pure water addition: qs Q_{AW1} |
| | | Temperature: 50 °C |
| | | pH, after pellets addition: 3.5 |
| | | Time before solid / liquid separation: 10 min |
| | | Agitation: magnetic stirrer |
| Extraction | Pellets of the rinse step and water mixing at alkaline pH, followed by a solid / liquid separation | Ultra-pure water: qs Q_{AW1} |
| | | Temperature: 50 °C |
| | | pH adjustment, after pellets addition: 9 |
| | | Time before solid / liquid separation: 10 min |
| | | Agitation: magnetic stirrer |
| Pellets rewash | Pellets of extraction and water mixing, followed by a solid / liquid separation | Ultra-pure water: qs Q_{AW1} |
| | | Temperature: 50 °C |
| | | pH, after pellets addition: 9 |
| | | Time before solid / liquid separation: 10 min |
| | | Agitation: magnetic stirrer |
| Solid liquid separation | | Lab centrifuge: Jouan KR 41 |
| | | 4000 g during 10 min |
| Proteins analyses | | Nitrogen analysis by Kjeldhal (Foss^{®}) following the ISO method 5983-2. The proteins (Pt) content is the nitrogen content multiplied by 6.25. |
| Dry solid and ash analyses | | Prepash system (Precisa^{®}) |

### Results and discussion

As shown in Table 3, the combination of an acid wash followed by an alkaline extraction allowed the production of a proteins concentrate. The purity of the extract is higher than 80 % of proteins on dry basis, without precipitation.

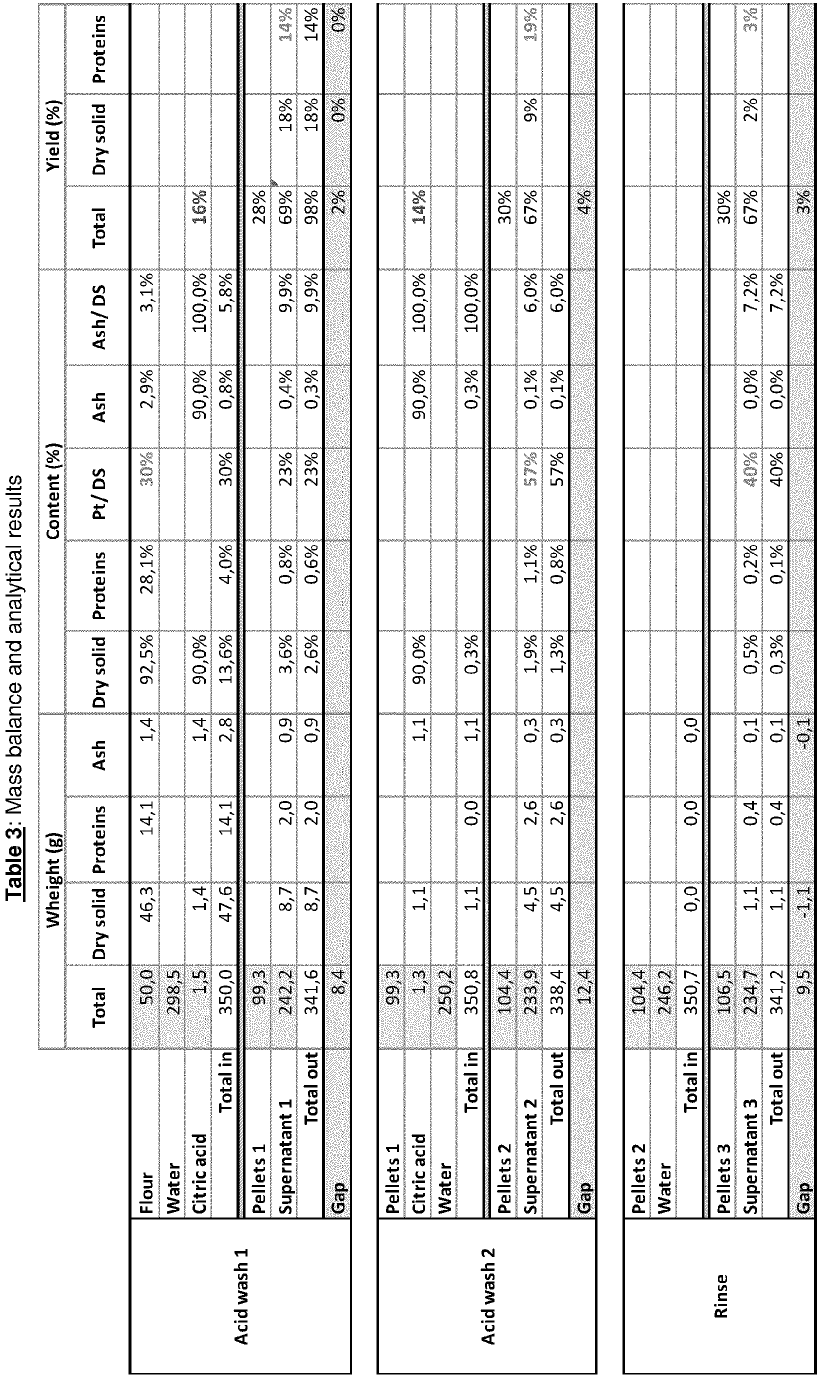

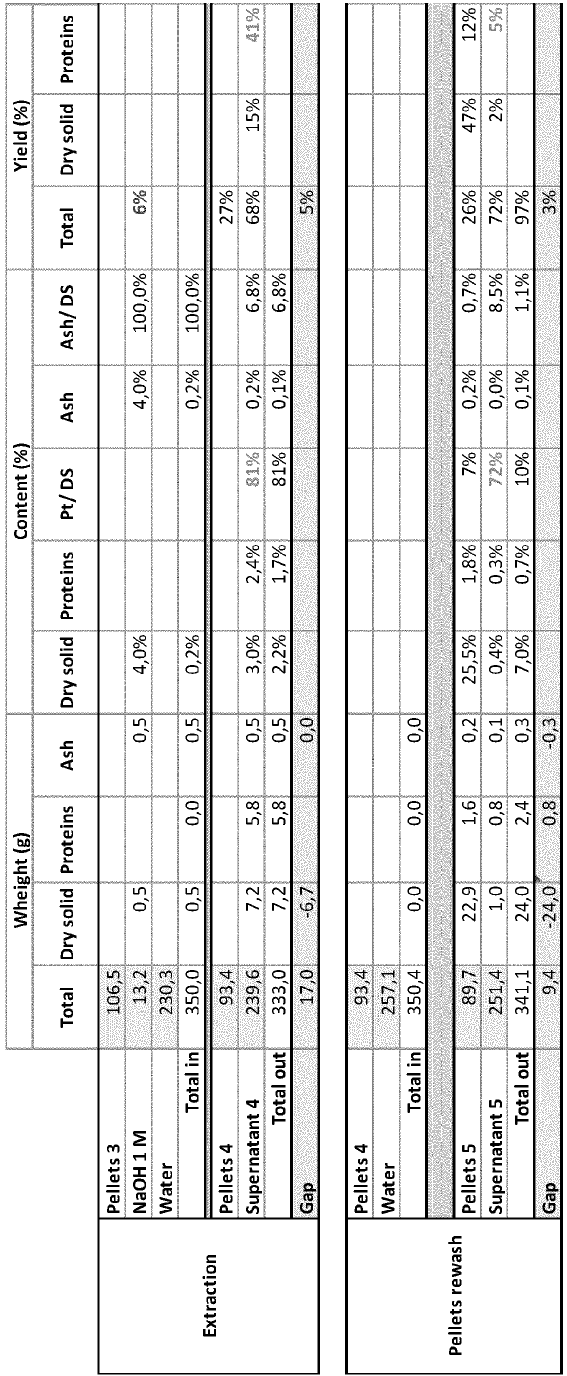

A second test was performed to decrease the proteins losses during the washing step and to increase the final extract purity.

Analytical results and mass balance are presented in Table 4. The final purity of the extract was over 85 %, without precipitation. Furthermore, the proteins extraction yield was comparable to a standard pH-metric process:
17% of the feed proteins were recovered in the wash and rinse supernatants. This fraction corresponds to the albumin fraction, which is recovered in the precipitate supernatant in a standard pH-metric process.
11% of the feed proteins stayed insoluble after extraction. It corresponds to the prolamine and glutelin fractions, which are also not recovered with a standard pH-metric process.
65% of the proteins were extracted under alkaline conditions. This yield is comparable to the pH metric process.

### Conclusion

The process of the invention allows the production of a non-precipitated proteins isolate. The extraction yield is not affected compared to prior art pH-metric processes.

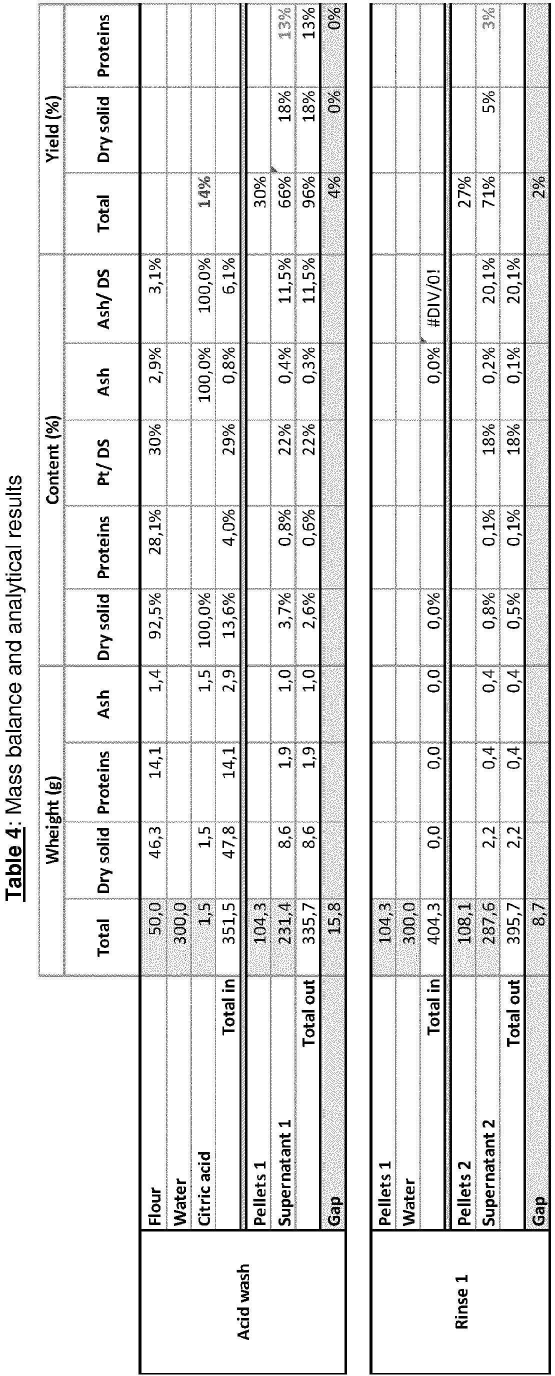

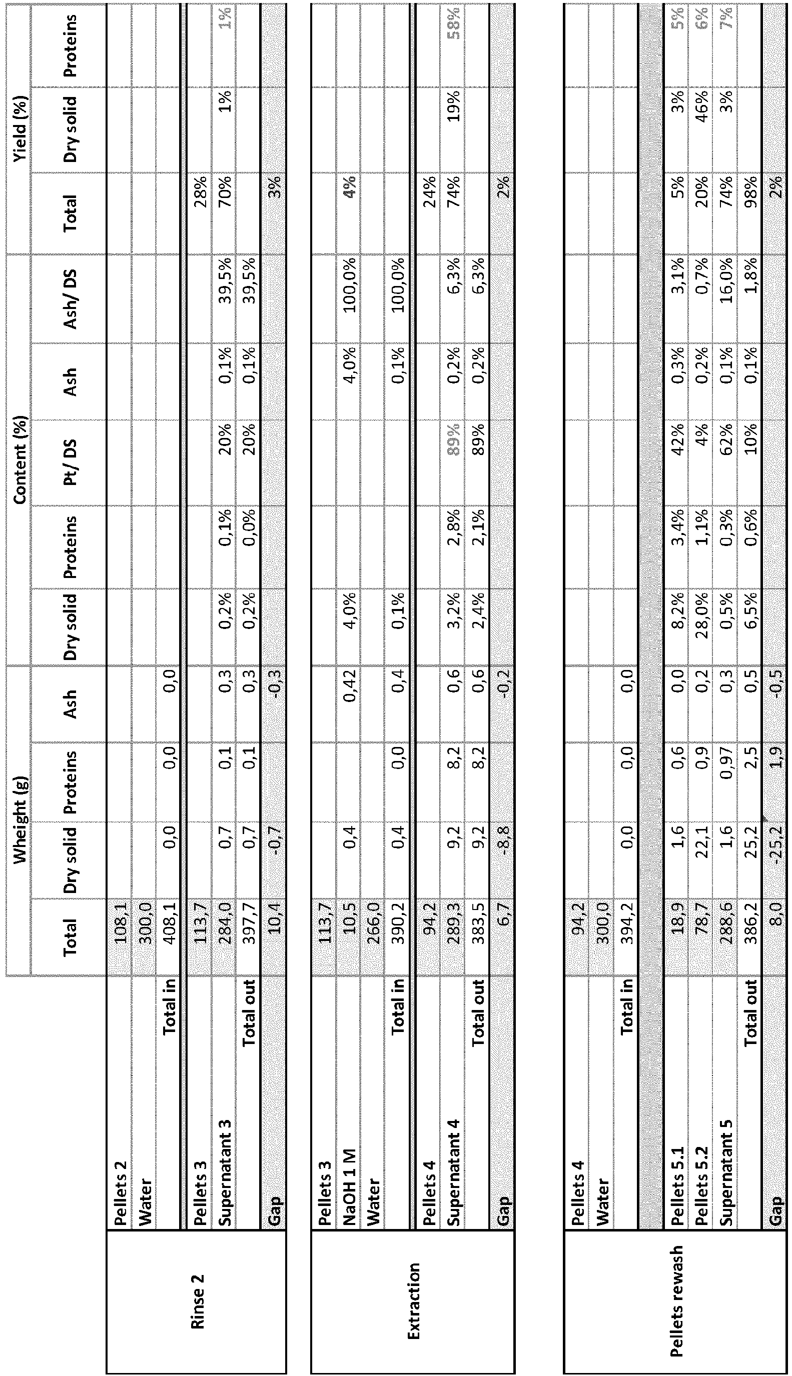

### Example 2: Process improvement on faba bean

The aim of these series of tests was to optimize the process by decreasing the amount of inputs (acid). There were performed with dehulled fababean flour, at lab scale.

Materials and methods are described in Table 5.

| **Table 5:** Materials and methods | | |
|---|---|---|
| Step | Principle | Material and method |
| Acid wash Option 1: weak acid and base combination | Flour and acidified water mixing followed by a solid / liquid separation | Flour: Roll milled, dehulled faba bean Acidified ultra-pure water with citric acid + sodium |
| | | citrate |
| | | Citric acid powder quantity = 3 % of flour quantity |
| | | Flour on acidified water ratio: 1/6 |
| | | Q citric acid + Q water + Q flour = Q_{AW1} |
| | | Temperature: 50 °C |
| | | pH target, after flour addition: 4.5 |
| | | Time before solid / liquid separation: 10 min |
| | | Agitation: magnetic stirrer |
| Acid wash Option 2: strong acid | Flour and acidified water mixing followed by a solid / liquid separation | Flour: Roll milled, dehulled faba bean |
| | | Acidified RO water with sulfuric acid |
| | | Sulfuric acid DS quantity = 1 % of flour quantity |
| | | Flour on acidified water ratio: 1/6 |
| | | Q citric acid + Q water + Q flour = Q_{AW1} |
| | | Temperature: 50 °C |
| | | pH target, after flour addition: 4.5 |
| | | Time before solid / liquid separation: 10 min |
| | | Agitation: magnetic stirrer |
| Rinse step 1 | Pellets of acid wash and water mixing, followed by a solid / liquid separation | Ultra-pure water: qs Q_{AW1} |
| | | Temperature: 50 °C |
| | | pH, after pellets addition: 3.5 |
| | | Time before solid / liquid separation: 10 min |
| | | Agitation: magnetic stirrer |
| Rinse step 2 | Pellets of acid wash and water mixing, followed by a solid / liquid separation | Ultra-pure water: qs Q_{AW1} |
| | | Temperature: 50 °C |
| | | pH, after pellets addition: 3.5 |
| | | Time before solid / liquid separation: 10 min |
| | | Agitation: magnetic stirrer |
| Extraction | Pellets of the rinse step and water mixing at alkaline pH, followed by a solid / liquid separation | Ultra-pure water: qs Q_{AW1} |
| | | Temperature: 50 °C |
| | | pH adjustment, after pellets addition: 7 |
| | | Time before solid / liquid separation: 10 min |
| | | Agitation: magnetic stirrer |
| Pellets rewash | Pellets of the rinse step and water mixing at alkaline pH, followed by a solid / liquid separation | Ultra-pure water: qs Q_{AW1} |
| | | Temperature: 50 °C |
| | | pH adjustment, after pellets addition: 9 |
| | | Time before solid / liquid separation: 10 min |
| | | Agitation: magnetic stirrer |
| Solid liquid separation | | Lab centrifuge: Jouan KR 41 |
| | | 4000 g during 10 min |
| Proteins analyses | | Nitrogen analysis by Kjeldhal (Foss^{®}) following the ISO method 5983-2. The proteins (Pt) content is the nitrogen content multiplied by 6.25. |
| Dry solid and ash analyses | | Prepash system (Precisa^{®}) |

### Results and discussion

As shown in Table 6, there was no significant difference in proteins extraction yield and purity, whatever the citric acid and sodium citrate ratio. Furthermore, the buffer effect was not improved by the sodium citrate addition.

| **Table 6:** pH, weak acid and base effect on the extract proteins purity and yield | | | |
|---|---|---|---|
| **Test** | **A** | **B** | **C** |
| Citric acid/ flour content | 3,0% | 3,6% | 5,5% |
| Citrate Na / flour content | 0,0% | 2,0% | 6,0% |
| Wash pH | 4,45 | 4,57 | 4,57 |
| Rinse 1 pH | 4,52 | 4,75 | 4,73 |
| Rinse 2 pH | 4,6 | 4,86 | 4,83 |
| Albumin fraction yield | 16% | 16% | 18% |
| Glutelin fraction yield | 16% | 18% | 16% |
| Globulin fraction yield | 68% | 65% | 66% |
| **Proteins purity, pH 7** | **97%** | **98%** | **97%** |
| **Estimated proteins purity, pH 9** | **91%** | **93%** | **92%** |

According to these results, the right purity and extraction yield could be achieved as long as the pH was maintained between 4.45 and 4.86.

The quantity of acid related to the feed flour was however quite high.

A second set of tests was performed with strong acid to decrease the inputs consumption.

As presented in Table 7, the extract purity was not affected by the use of sulfuric acid. On another hand the inputs consumption was significantly reduced.

The buffer effect was not affected by the use of strong acid. The pH could be maintained between 4.6 and 4.7 during the rinse steps.

| **Table 7:** Process validation with a strong acid | | |
|---|---|---|
| **Test** | **D** | **E** |
| Sulfuric acid/flour content | 1,1% | 1,0% |
| Wash pH | 4,58 | 4,55 |
| Rinse 1 pH | 4,63 | 4,6 |
| Rinse 2 pH | 4,67 | 4,59 |
| Albumin fraction yield | 20% | 16% |
| Glutelin fraction yield | 17% | 18% |
| Globulin fraction yield | 63% | 63% |
| **Proteins purity, pH 7** | **99%** | **96%** |
| **Estimated proteins purity, pH 9** | **94%** | **94%** |

### Conclusion

The process comprising an acidic pre-wash followed by an alkaline extraction could be applied using strong acid, such as sulfuric acid, without affecting the protein extract purity.

The buffer effect of the acidified pellets was high enough to maintain a low pH during the rinse steps. The use of strong acid allowed a significant reduction of the inputs' consumption.

### Example 3: Sequential extraction

The method of the invention could be used as a basis of a proteins range development. The acidic washing can be followed by a sequential extraction at different pH to perform proteins cracking.

Materials and methods for the prewashing and the solid / liquid separation is presented Table 5.

Extraction steps and the fat analysis were performed as described in Table 8.

| **Table 8**: Materials and methods | | |
|---|---|---|
| **Step** | **Principle** | **Material and method** |
| Extraction 1 | Pellets of the rinse step and water mixing at neutral pH, followed by a solid / liquid separation | Ultra-pure water: qs Q_{AW1} |
| | | Temperature: 50 °C |
| | | pH adjustment, after pellets addition: 7 |
| | | Time before solid / liquid separation: 10 min |
| | | Agitation: magnetic stirrer |
| Extraction 2 | Pellets of the rinse step and water mixing at alkaline pH, followed by a solid / liquid separation | Ultra-pure water: qs Q_{AW1} |
| | | Temperature: 50 °C |
| | | pH adjustment, after pellets addition: 8 |
| | | Time before solid / liquid separation: 10 min |
| | | Agitation: magnetic stirrer |
| Extraction 3 | Pellets of the rinse step and water mixing at alkaline pH, followed by a solid / liquid separation | Ultra-pure water: qs Q_{AW1} |
| | | Temperature: 50 °C |
| | | pH adjustment, after pellets addition: 9 |
| | | Time before solid / liquid separation: 10 min |
| | | Agitation: magnetic stirrer |
| Fat content | | NF ISO 11085, B process. Fat content measurement after an acidic hydrolysis. |

### Results

As shown in Table 9, extractions at pH 7 and pH 9 allowed the production of proteins isolate. At pH 8 the proteins purity was lower than 85 %. More than 68 % of the globulin fraction was extracted at pH 7.

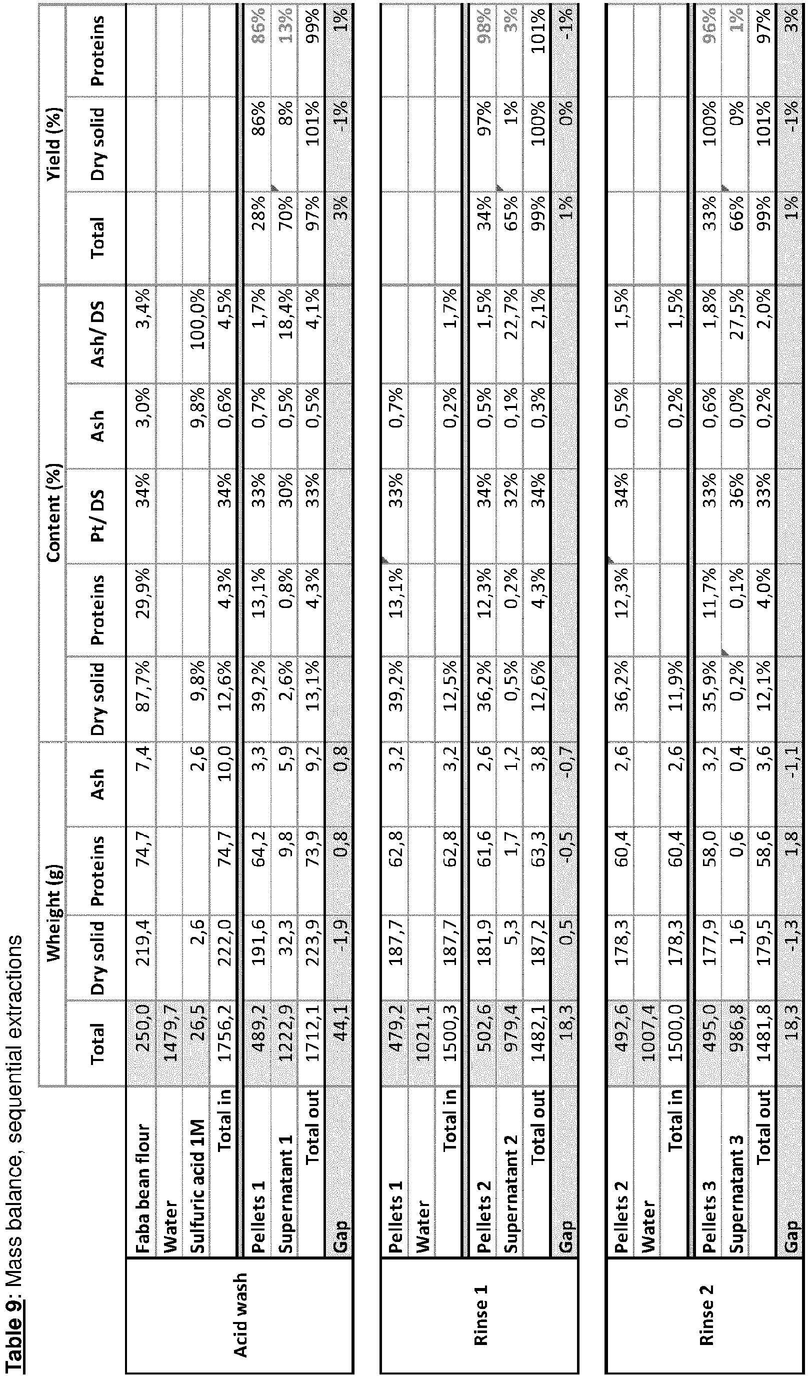

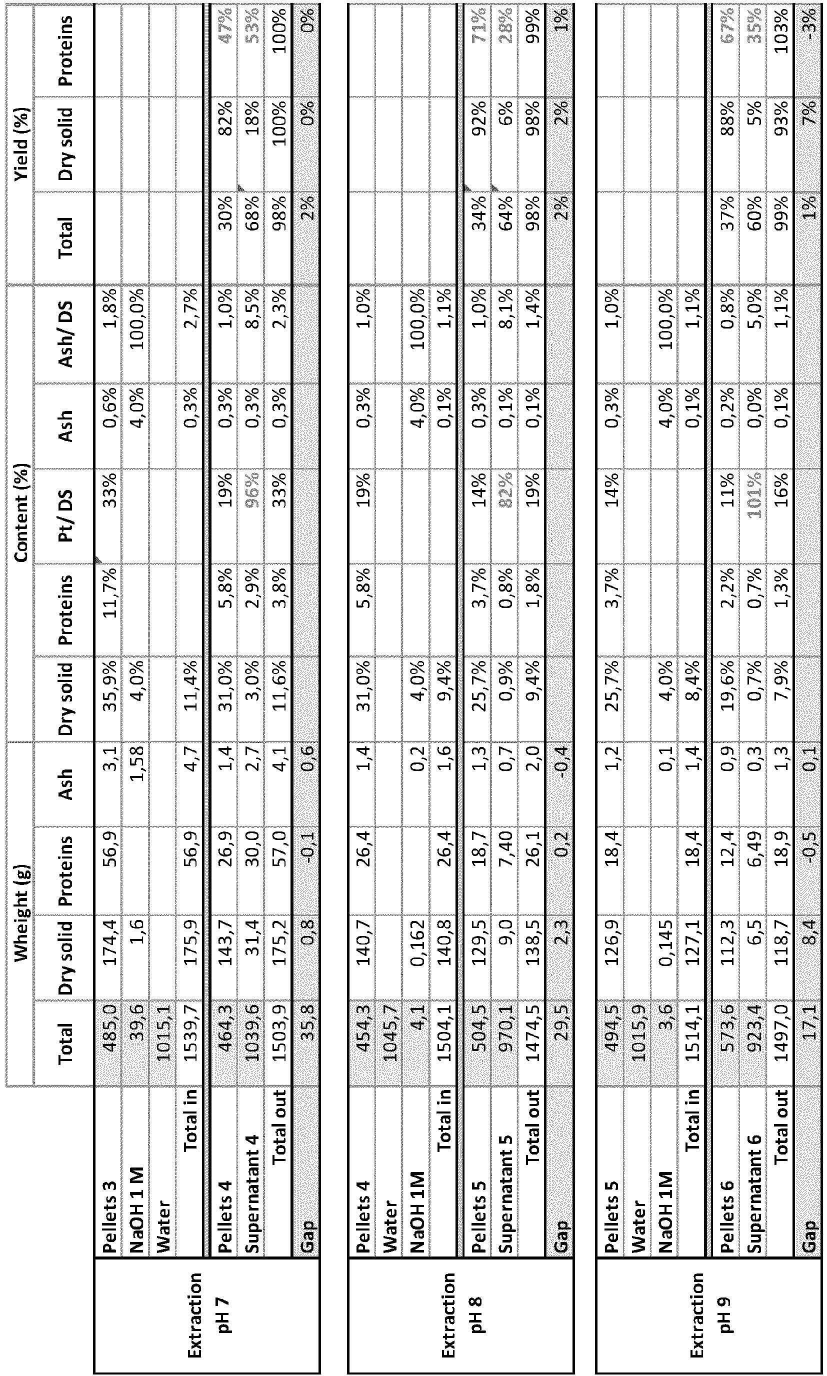

A second test was performed wherein the extraction at pH 7 was directly followed by an extraction at pH 9.

Results are summarized in Table 10**Table**. Again, the main fraction of globulins was extracted at pH 7. The proteins purity was also higher at this pH. Furthermore, the fat content was significantly higher after an extraction at pH 9.

| **Table 10:** Proteins purity and fat content of proteins fraction, according to the extraction pH | | |
|---|---|---|
| **Extraction condition** | **pH 7** | **pH 9** |
| **Proteins** purity | 98% | 80% |
| Total proteins yield | 50% | 15% |
| Globulin yield | 77% | 23% |
| Fat content | 1,2% | 11,2% |

### Conclusion:

The process comprising an acidic pre-washing followed by an alkaline extraction allowed a sequential extraction at different alkaline pH.

The proteins fraction composition varied according to the extraction pH.

Furthermore, it seemed that fat could be segregated in one specific proteins fraction. One can also expect different functionalities as the proteins fractions are not soluble at same pH. For example, the fraction, extracted at pH 7 can be used as soluble or instant proteins in beverage applications.

### Example 4: Application to pea proteins

The method of the invention was applied on yellow pea seeds. Material and method are described in Table 5.

Results are presented as a mass balance in Table 11. The proteins extraction yield and the final extract purity were in line with the faba bean results.

The method of the invention is thus suitable to pea proteins production.

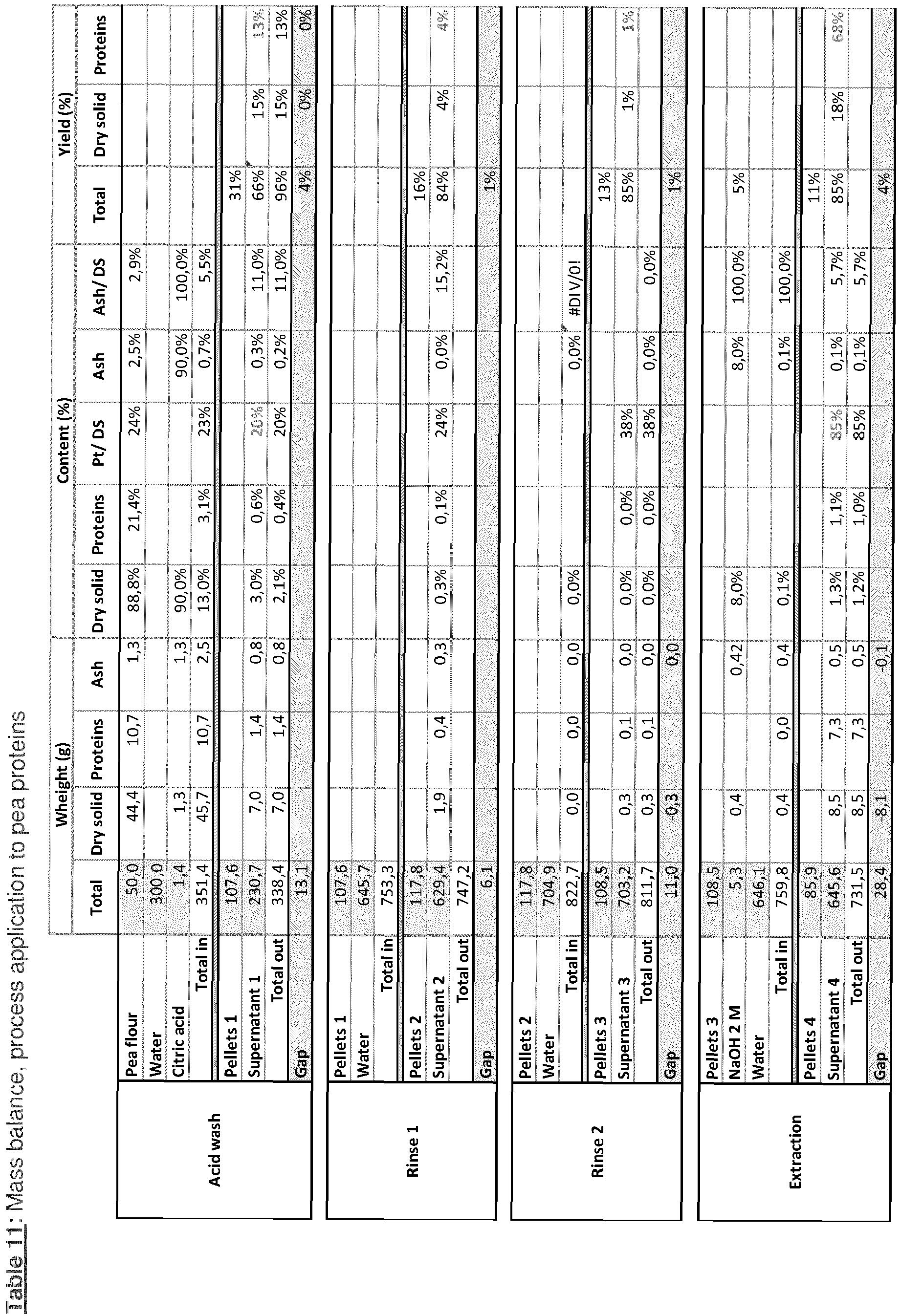

### Example 5: Comparison of the pea proteins quality

Two tests were performed at pilot scale to compare a conventional pH metric process with the method of the invention.

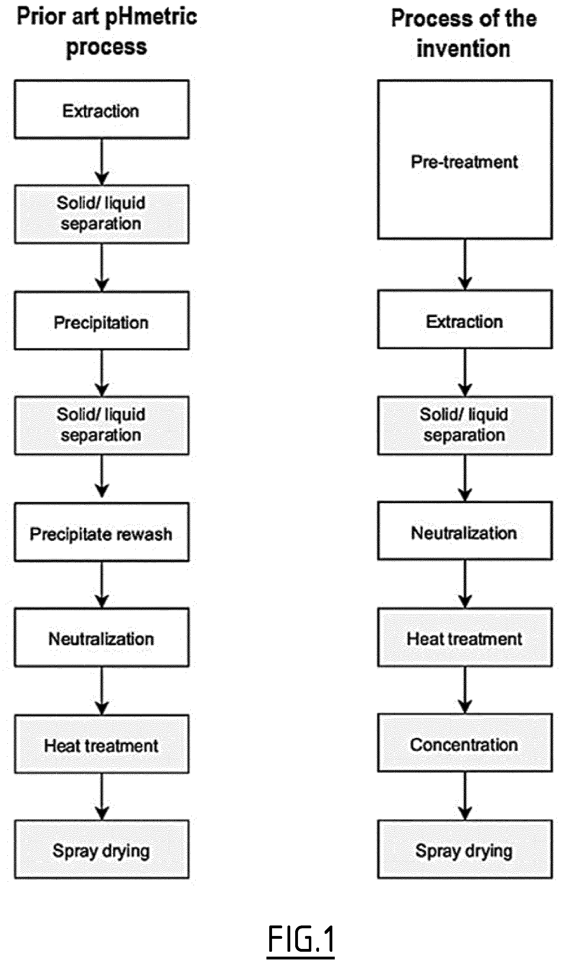

Both process diagrams are presented in **Figure 1****.**

Applied parameters and analytical methods are summarized in Tables 12, 13 and 14.

| **Table 12:** Materials and methods for the standard pH-metric process | | |
|---|---|---|
| **Step** | **Principle** | **Material and method** |
| Extraction | Alkaline extraction of flour proteins in a double jacketed tank | Reverse osmosis water |
| | | Temperature: 55 °C |
| | | pH adjustment, after pellets addition: 9, with NaOH |
| | | Time before solid / liquid separation: 30 min |
| | | Agitation: 3 blades agitator, 150 rpm |
| Solid / liquid separation 1 | Separation step after extraction, precipitation and precipitate rewash | Decanter Z23, Flottweg |
| | | Temperature: 55 °C |
| | | Centrifugal force: 3500 to 4000 g |
| | | Differential speed: 5 to 20 % |
| | | Impeller: 135 to 140 mm |
| | | Feed flow rate: 400 kg /h |
| Solid / liquid separation 2 | Only used to clarify the decanter supernatant after extraction | Disc stack centrifuge, Easy-Scale GEA |
| | | Temperature: 55 °C |
| | | Centrifugal force: 12 000 g |
| | | Total disludge / Partial disludge: 1/5 |
| | | Feed flow rate: 250 kg/h |
| Precipitation | Acidic proteins precipitation of the extract supernatant | Temperature: 55 °C |
| | | pH: 4.5 with Sulfuric acid |
| | | Time: 15 min |
| Precipitate rewash | Precipitate rewash in RO water at pH 4.5, followed by a solid / liquid separation | Reverse osmosis water |
| | | Precipitate / water ratio: 1/2 |
| Neutralization | Precipitate neutralization and dilution | pH: 6.8 - 7 with NaOH addition |
| | | RO water addition to decrease the viscosity |
| Heat treatment | Product stabilization | Tubular heat exchanger, Actini |
| | | Temperature: 90 °C |
| | | Holding time: 90 s |
| Drying | Product stabilization | Spray dryer |
| | | Inlet air temperature: 185 °C |
| | | Outlet air temperature: 85°C |

| **Table 13:** Materials and methods for the method of the invention | | |
|---|---|---|
| **Step** | **Principle** | **Material and method** |
| Acid wash | Flour and acidified water mixing followed by a solid / liquid separation | Reverse osmosis water |
| | | Temperature: 55 °C |
| | | pH target: 4 to 4.5 with sulfuric acid |
| | | Time before solid / liquid separation: 20 min |
| | | Agitation: 3 blades agitator, 150 rpm |
| Solid / liquid separation 1 | Separation step after acid wash, rinse and extraction | Decanter Z23, Flottweg |
| | | Temperature: 55 °C |
| | | Centrifugal force: 3500 to 4000 g |
| | | Differential speed: 5 to 20 % |
| | | Impeller: 135 to 140 mm |
| | | Feed flow rate: 400 kg /h |
| Rinse 1 | Pellets of acid wash and water mixing, followed by a solid / liquid separation | Reverse osmosis water, qs: Q_{AW} |
| | | Temperature: 55 °C |
| | | 3 blades agitator, 150 rpm |
| | | Time: 10 min |
| Rinse 2 | Pellets of rinse 1 and water mixing, followed by a solid / liquid separation | Reverse osmosis water, qs: Q_{AW} |
| | | Temperature: 55 °C |
| | | 3 blades agitator, 150 rpm |
| | | Time: 10 min |
| Extraction | Alkaline extraction of rinsed pellets proteins in a double jacketed tank | Reverse osmosis water |
| | | Temperature: 55 °C |
| | | pH adjustment, after pellets addition: 9, with NaOH |
| | | Time before solid / liquid separation: 30 min |
| | | Agitation: 3 blades agitator, 150 rpm |
| Solid / liquid separation 2 | Only used to clarify the decanter supernatant after extraction | Disc stack centrifuge, Easy-Scale GEA |
| | | Temperature: 55 °C |
| | | Centrifugal force: 12 000 g |
| | | Total disludge / Partial disludge: 1/5 |
| | | Feed flow rate: 250 kg/h |
| Neutralization | Extract neutralization | pH: 6.8 - 7 with NaOH addition |
| Heat treatment | Product stabilization | Tubular heat exchanger, Actini |
| | | Temperature: 90 °C |
| | | Holding time: 90 s |
| Concentration | Dry solid increase before spray drying | Falling film evaporator, GEA |
| | | Boiling temperature < 50 °C |
| | | Concentration target for a viscosity < 100 cp |
| Drying | Product stabilization | Spray dryer |
| | | Inlet air temperature: 185 °C |
| | | Outlet air temperature: 85°C |

| **Table 14:** Analytical methods for proteins characterization | |
|---|---|
| **Analyses** | **Principle** |
| Color | Evaluation with a colorimeter. Results are expressed by 3 parameters L*, a* and b*: |
| | • L* (clarity), which ranges from 0 (black) to 100 (white) |
| | • a * which ranges from -300 (green) axis to 299 (red). |
| | • b * which ranges from -300 (blue) axis to 299 (yellow). |
| Foaming properties | Foaming properties were evaluated with a Foamscan (Teclis Scientific) using a 0.1% protein solution. Foam was formed by bubbling air in the solution at a flow rate of 200 ml/min for 30 seconds. The foam volume and its stability was then recorded during 600 seconds. Egg white is used as a reference for this test. |
| Solubility | The protein solubility was tested on protein suspensions at 2% protein content at different pH. The protein solubility was estimated by Kjeldahl method on the supernatant after centrifugation (15000 g, 10 min). |
| Gelling properties | Gelling capacity was measured on a DHR-2 rheometer (TA) with a 40 mm plate / plate geometry. A 10% protein solution at pH 7 was used. A temperature ramp was applied to the sample: heating from 25 to 90°C with a gradient of 2°C/min, stabilization without oscillation at 90°C for 10 minutes, cooling from 90 to 25°C with a gradient of 2.5°C/min. A strain of 0.1% was applied during the test. G' (storage modulus) and G" (loss modulus) were measured |
| Viscosity | Rheological analysis was performed at 25°C on a DHR-2 rheometer (TA) with a vane cup geometry. Different product concentrations were used. Viscosity profile was measured on a shear rate range between 0.1 s⁻¹ and 1 000 s⁻¹. |

### Results:

As shown in Table 15, there is a significant difference of color between both powders.

| **Table 15:** Lab measurement results | | | |
|---|---|---|---|
| **Data** | **L** | **a** | **b** |
| Standard | 89,74 | -0,78 | 20,51 |
| Invention | 89,79 | 1,09 | 12,81 |

Each product was tasted as such and in 4% solution by 6 different people (naive panel). The beany intensity of proteins obtained by the method of the invention was evaluated as significantly lower than standard pH-metric proteins.

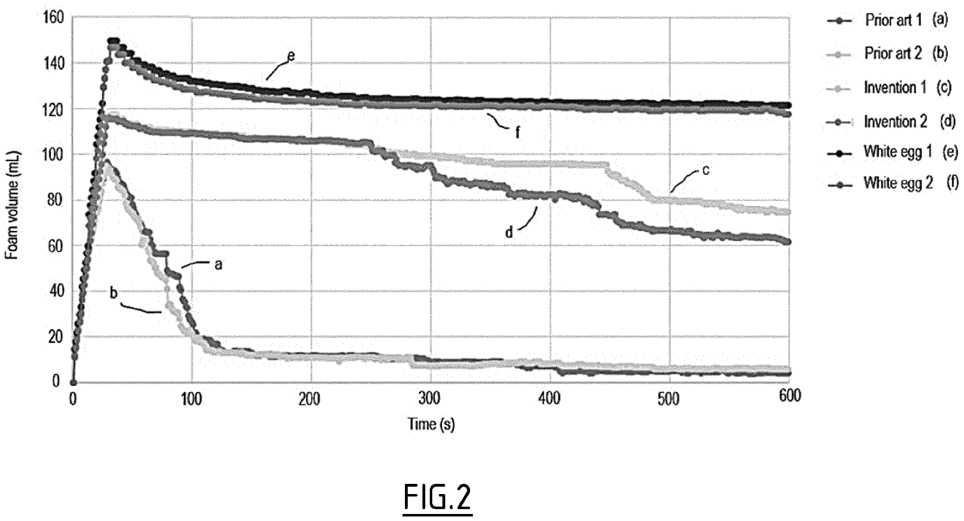

As shown in Figure 2, the proteins obtained by the method of the invention have a higher foaming capacity than precipitated proteins and the foam is stable over time.

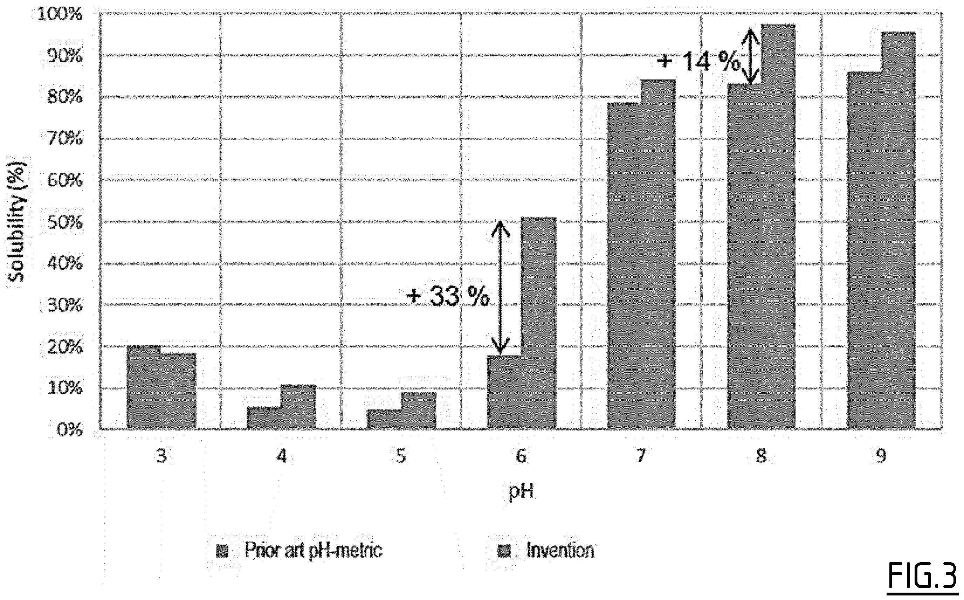

The proteins solubility was also significantly improved by the method of the invention, as shown in Figure 3.

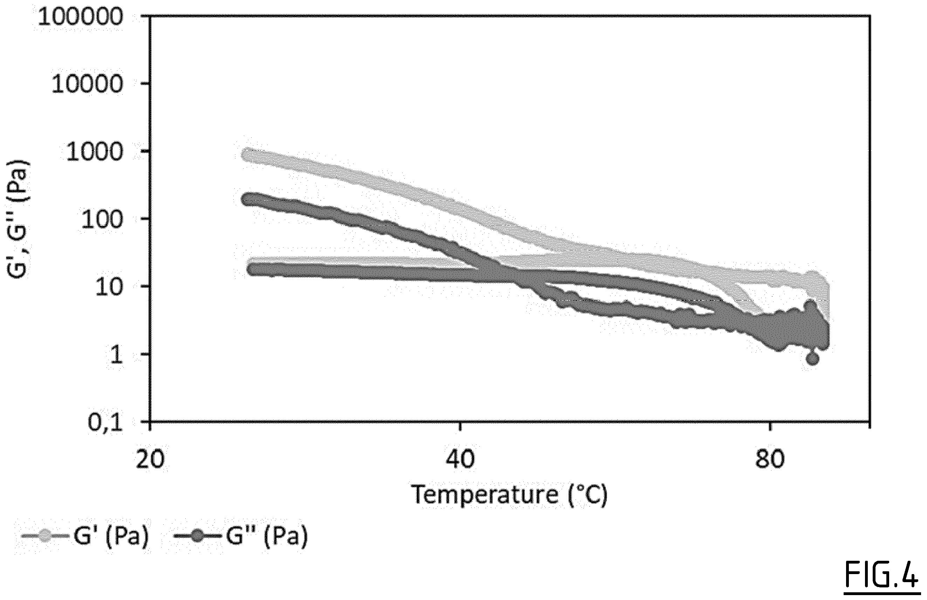

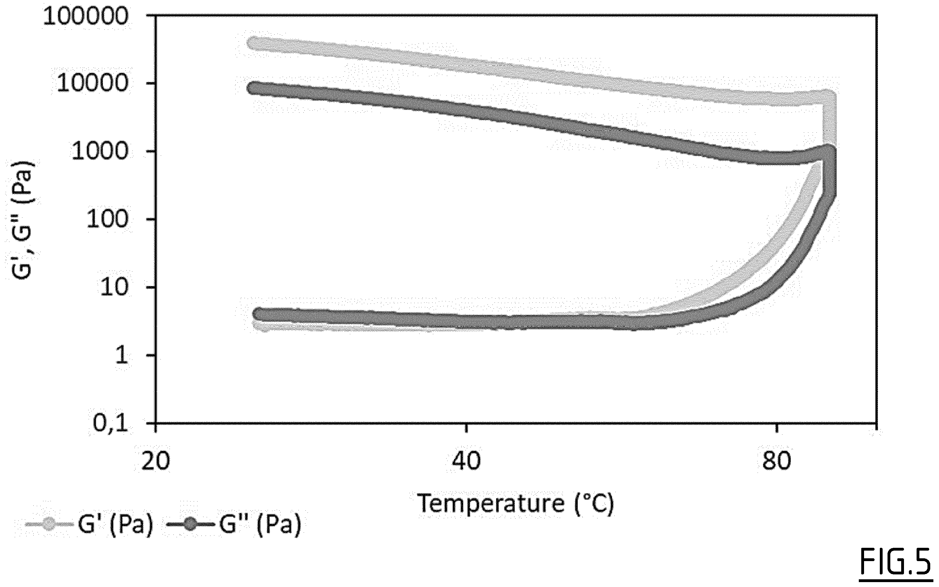

Figures 4 and 5 compare the gelling properties by thermal treatment of proteins obtained by both processes.

A solution, containing 10% of proteins obtained by the method of the invention can form a gel, contrary to standard pH-metric proteins. In this case, rheological properties are only explained by the solution viscosity.

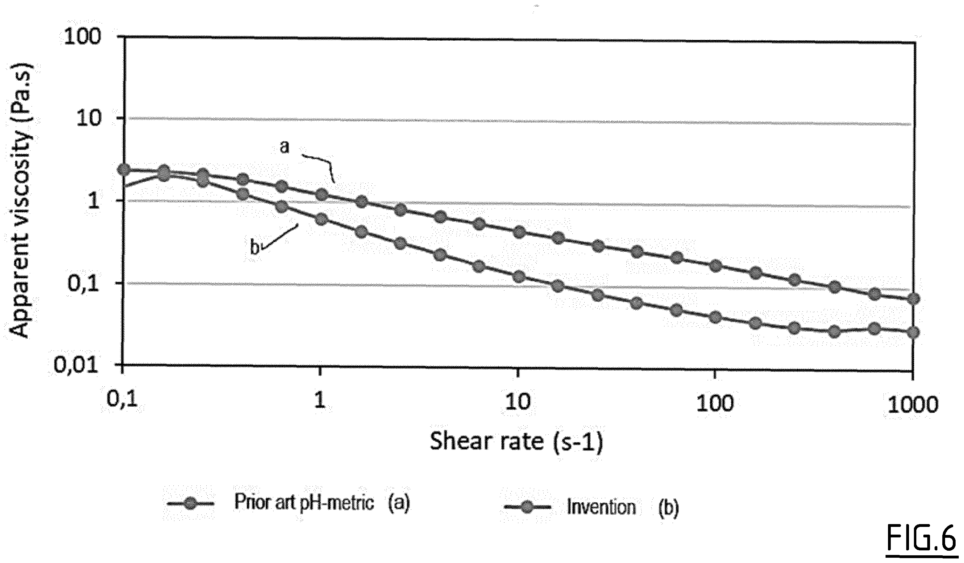

Figure 6 shows the viscosity evolution of a 10 % dry solid solution, according to shear stress. The viscosity of proteins of the invention solution is lower than the precipitated one, regardless the shear stress.

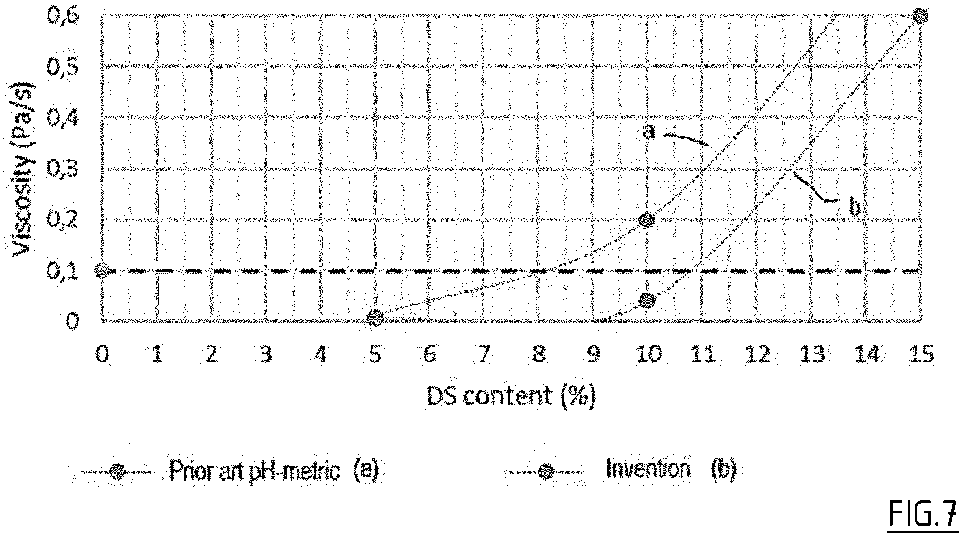

This viscosity was measured at different concentration for 100 s⁻¹ shear rate. Results are presented in Table 16 and Figure 7. At an equivalent shear rate, the solution obtained by the method of the invention has a lower viscosity than the precipitated one, for any concentration.

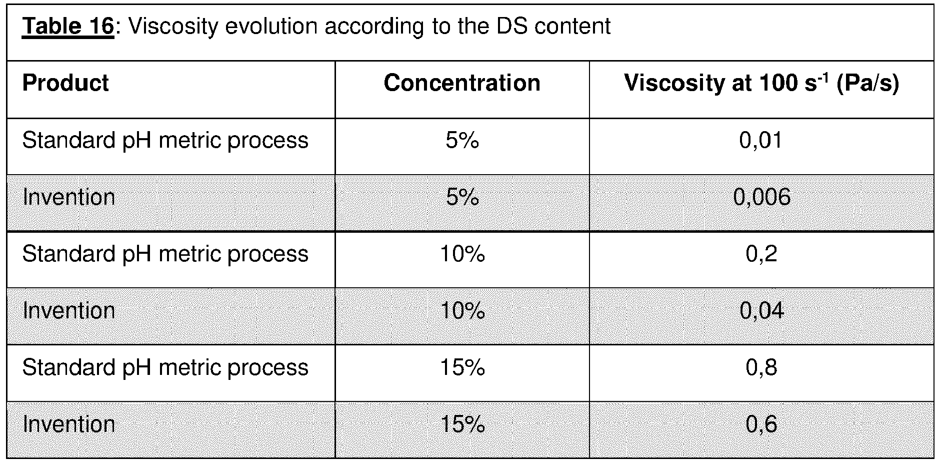

### Conclusion

The pulses proteins functionality and taste are significantly improved by a process comprising acid wash followed by alkaline extraction as defined above.

These new functionalities can extend the proteins isolate application field and also reduce the production OPEX. For example, a lower viscosity allows a higher concentration before drying which can significantly decrease the energy consumption.

### Example 6: Other protein sources

The process developed above was applied on different proteins sources. Results are summarized in Table 17.

| **Table 17:** Other plant sources results | | |
|---|---|---|
| **Plant source** | **Extraction yield** | **Purity** |
| Red lentil | 53% | 88% |
| Mojette bean | 32% | 82% |
| Azucki bean | 60% | 84% |

## Claims

1. A method for preparing a protein isolate displaying a purity higher than 85% from plant parts, said method comprising the following successive steps:
a) washing said plant parts in acidic conditions, thereby obtaining acid washed plant parts;
b) contacting said acid washed plant parts with an alkaline solution, and
c) recovering the liquid fraction thereby obtaining a protein isolate displaying a purity higher than 85%,
wherein said method does not comprise any precipitation step and any membrane filtration step.

2. The method according to claim 1, wherein the pH of said washing step is of 3.5 to 5.

3. The method according to claim 1 or 2, wherein said acid washed plant parts are recovered at the end of said washing step by solid/liquid separation.

4. The method according to any one of claims 1 to 3, wherein said acid washed plant parts have a pH comprised between 3.5 and 5.

5. The method according to any one of claims 1 to 4, said method further comprising between the washing step a) and the contacting step b), a step of rinsing said acid washed plant parts with an aqueous solution.

6. The method according to claim 5, wherein said acid washed plant parts has a pH comprised between 3.5 and 5 after said rinsing step.

7. The method according to any one of claims 1 to 6, wherein said alkaline solution used in step b) has a pH of 7 to 9.

8. The method according to any one of claims 1 to 7, wherein said liquid fraction is recovered at step c) by solid/liquid separation.

9. The method according to any one of claims 1 to 8, wherein said steps b) and c) are repeated at a higher pH.

10. The method according to any one of claims 1 to 9, wherein said steps a) to c) are performed at a temperature comprised between 10°C and 60°C.

11. The method according to any one of claims 1 to 10, wherein said protein isolate is directly obtained at said recovering step c).

12. The method according to any one of claims 1 to 11, further comprising after said recovering step c), a neutralization step, a heat treatment step, a concentration step and/or a drying step.

13. The method according to any one of claims 1 to 12, wherein said plants are legumes.

14. The method according to any one of claims 1 to 13, wherein said plant parts are seeds.

15. The method according to claim 14, wherein said seeds are used in the form of flour in said washing step a).
